# EUROPÄISCHE PATENTSCHRIFT

(11) **EP 1 809 460 B1**
(45) Veröffentlichungstag und Bekanntmachung des Hinweises auf die Patenterteilung: **26.05.2010**
(21) Anmeldenummer: 05810923.2
(22) Anmeldetag: 10.11.2005
(51) Int. Cl.: B29C 44/08

(54) **LEICHTE SCHALLISOLIERENDE VERKLEIDUNG FÜR EIN KAROSSERIETEIL EINES KRAFTFAHRZEUGES UND VERFAHREN ZU IHRER HERSTELLUNG**
LIGHT-WEIGHT SOUND-ABSORBING COVERING FOR A BODY PART OF A MOTOR VEHICLE AND METHOD FOR PRODUCING THE SAME
REVETEMENT INSONORISANT LEGER POUR PIECE DE CARROSSERIE D'UN VEHICULE AUTOMOBILE, ET PROCEDE POUR LE REALISER

(30) Priorität: 11.11.2004 DE 102004054646
(43) Veröffentlichungstag der Anmeldung: 25.07.2007
(73) Patentinhaber: Carcoustics TechConsult GmbH, 51381 Leverkusen (DE)
(72) Erfinder: SOLTAU, Dirk, 40479 Düsseldorf (DE); HANSEN, Michael, 50735 Köln (DE); SCHÖNZART, Paul, 51381 Leverkusen (DE)
(74) Vertreter: Bauer Vorberg Kayser Patentanwälte
(86) Internationale Anmeldenummer: PCT/EP2005/012078
(87) Internationale Veröffentlichungsnummer: WO 2006/050961

(56) Entgegenhaltungen:
- EP-A- 0 882 561
- DE-A1- 2 735 153
- GB-A- 1 384 061
- US-A- 4 242 391
- US-A1- 2003 017 224

## Beschreibung

Die Erfindung betrifft ein Verfahren zur Herstellung einer leichten, schallisolierenden Verkleidung für ein Karosserieteil eines Kraftfahrzeuges gemäß dem Oberbegriff des Anspruchs 1 sowie eine leichte, schallisolierende Verkleidung für ein Karosserieteil eines Kraftfahrzeuges, insbesondere in Form einer Stirnwandverkleidung, gemäß dem Oberbegriff des Anspruchs 11.

Herkömmliche Stirnwandverkleidungen für Kraftfahrzeuge sind aus einer schalldämmenden Schwerschicht und einer als elastische Feder eines akustischen Feder-Masse-Systems wirkenden Schaumstoff- oder textilen Vlieslage aufgebaut. Das Flächengewicht derartiger Stirnwandverkleidungen liegt üblicherweise im Bereich oberhalb von 2 kg/m².

Aus der DE 27 35 153 A1 ist ein spezifisch leichtes, als Doppelmatte ausgebildetes Feder-Masse-System bekannt, das als Stirnwandverkleidung eines Kraftfahrzeuges vorgesehen ist. Das Feder-Masse-System besteht aus einer Schicht aus offenporigem Polyurethan-Weichschaum und einer Deckschicht aus gefülltem Polyurethan-Schwerschaum. Der Polyurethan-Schwerschaum ist als Integralschaum ausgeführt, weist eine Shore-Härte A von 80 bis 90 auf und enthält einen zusätzlichen Füllstoffanteil von 400 bis 500 Gew.-%. Beide Schichten sind durch Hinterschäumen miteinander verbunden, wobei die Deckschicht in eine Form eingelegt und mit dem Polyurethan-Weichschaum hinterschäumt wird. Hinsichtlich der Realisierung des angegebenen Härtegrades der Deckschicht wird für die Herstellung des Polyurethan-Schwerschaums die Verwendung einer Polyolmischung vorgeschlagen, die zu 50% aus handelsüblichem Hartpolyol (Hydroxyl-Zahl etwa 300 bis 600) und zu 50% aus handelsüblichem Weichpolyol (Hydroxyl-Zahl etwa 40 bis 60) besteht.

Der vorliegenden Erfindung liegt die Aufgabe zugrunde, eine schalldämmende sowie schalldämpfende Verkleidung, insbesondere eine Stirnwandverkleidung für Kraftfahrzeuge bereitzustellen, die ein geringes Gewicht aufweist und sich mit relativ geringen Herstellungskosten realisieren lässt. Zugleich soll ein Verfahren zur Herstellung einer solchen schallisolierenden Verkleidung angegeben werden.

Hinsichtlich des Verfahrens wird diese Aufgabe erfindungsgemäß durch das Verfahren mit den Merkmalen des Anspruchs 1 gelöst.

Bei dem erfindungsgemäßen Verfahren wird unter Verwendung eines Formwerkzeuges eine Schalldämmschicht aus Polyurethanschaum mit offenzelligem Polyurethan-Weichschaum zur Ausbildung einer schallabsorbierenden Schicht hinterschäumt oder eine schallabsorbierende Schicht aus Polyurethan-Weichschaum mit Polyurethanschaum zur Ausbildung einer Schalldämmschicht hinterschäumt. Das erfindungsgemäße Verfahren ist ferner im Wesentlichen dadurch gekennzeichnet, dass der Polyurethan-Weichschaum aus dem gleichen Isocyanat-Material und dem gleichen Polyol-Material erzeugt wird wie der Polyurethanschaum der Schalldämmschicht, jedoch mit unterschiedlichem Mischungsverhältnis von Isocyanat-Material und Polyol-Material, wobei der Gewichtsanteil des Isocyanat-Materials in der Mischung zur Herstellung der Schalldämmschicht größer eingestellt wird als in der Mischung zur Herstellung der schallabsorbierenden Schicht, so dass die Schalldämmschicht eine im Wesentlichen luftundurchlässige Außenhaut und eine höhere Rohdichte aufweist als die erzeugte schallabsorbierende Schicht.

Mit dem erfindungsgemäßen Verfahren lassen sich besonders leichte schallisolierende Verkleidungen herstellen, die sowohl schalldämmend als auch schalldämpfend wirken. Die erhaltenen Verkleidungen reduzieren den Schallpegel im Fahrgastinnenraum erheblich und verbessern somit den Fahrkomfort des damit ausgerüsteten Kraftfahrzeuges. Andererseits erhöhen sie das Gewicht des Kraftfahrzeuges nur wenig, was für eine hohe Fahrleistung und einen niedrigen Kraftstoffverbrauch von Vorteil ist.

Die erfindungsgemäße Herstellungsweise, wonach der Polyurethan-Weichschaum aus dem gleichen Isocyanat-Material und dem gleichen Polyol-Material erzeugt wird wie der Polyurethanschaum der Schalldämmschicht, ermöglicht eine Kosteneinsparung insbesondere in anlagentechnischer Hinsicht. Denn eine Anlage zur Herstellung erfindungsgemäßer Verkleidungen benötigt aufgrund der erfindungsgemäßen Reduzierung der Anzahl der verwendeten Rohstoffkomponenten eine geringere Anzahl von Anlagenteilen, wie Rohstoffvorratsbehälter, Leitungen, Pumpen, Steuerungen und andere Teile. Investitions- und Betriebskosten können dadurch eingespart werden. Ferner besteht die Möglichkeit, beim Einkauf der benötigten Rohstoffkomponenten Mengenrabatte zu erzielen, da mit der Reduzierung der Anzahl der verwendeten Rohstoffkomponenten eine komponentenspezifische Mengenerhöhung einhergeht.

Eine bevorzugte Ausgestaltung des erfindungsgemäßen Verfahrens ist dadurch gekennzeichnet, dass zur Verdichtung des Polyurethanschaums in der Schalldämmschicht das Mischungsverhältnis zu seiner Herstellung so eingestellt wird, dass 100 Gewichtsteile, Polyol mit etwa 60 bis 70 Gewichtsteilen, vorzugsweise etwa 63 bis 68 Gewichtsteile Isocyanat vermischt werden, wohingegen das Mischungsverhältnis zur Herstellung des Polyurethan-Weichschaums für die schallabsorbierende Schicht so eingestellt wird, dass 100 Gewichtsteile Polyol mit etwa 45 bis 55 Gewichtsteilen, vorzugsweise etwa 48 bis 53 Gewichtsteilen Isocyanat vermischt werden.

Eine andere vorteilhafte Ausgestaltung des erfindungsgemäßen Herstellungsverfahrens besteht darin, dass dem Polyol oder der Mischung zur Herstellung des Polyurethan-Weichschaums für die schallabsorbierende Schicht CO₂ zugegeben wird. Hierdurch lässt sich die benötigte Menge an Rohstoffmaterial für die schallabsorbierende Schicht bzw. deren Rohdichte reduzieren.

Eine weitere vorteilhafte Ausgestaltung des erfindungsgemäßen Verfahrens ist dadurch gekennzeichnet, dass eine Seite einer flexiblen Sperrfolie mit dem die Schalldämmschicht bildenden Polyurethanschaum und die andere Seite der Sperrfolie mit dem die schallabsorbierende Schicht bildenden Polyurethan-Weichschaum hinterschäumt wird.

Üblicherweise werden zum Formschäumen verwendete Formen mit einem das Entformen der Schaumformteile erleichternden Trennmittel eingesprüht. Mittels der Sperrfolie lässt sich der Einsatz von Trennmittel beim Herstellen der Schichten der erfindungsgemäßen Verkleidung erheblich reduzieren, wenn die Sperrfolie so eingesetzt wird, dass sie die Funktion des Trennmittels zumindest teilweise mit übernimmt. Zudem verbessert die Sperrfolie die schalldämmende Wirkung der erfindungsgemäßen Verkleidung. Die Sperrfolie besteht vorzugsweise ebenfalls aus Polyurethan, wodurch die sortenreine Wiederverwertung (Recycling) der erfindungsgemäßen Verkleidung vereinfacht wird.

Hinsichtlich der schalldämmenden sowie schalldämpfenden Verkleidung wird die oben angegebene Aufgabe erfindungsgemäß durch die Verkleidung mit den Merkmalen des Anspruchs 11 gelöst.

Die erfindungsgemäße Verkleidung weist eine formgeschäumte Schalldämmschicht aus Polyurethanschaum und eine formgeschäumte schallabsorbierende Schicht aus offenzelligem Polyurethan-Weichschaum auf, wobei die Schalldämmschicht und die schallabsorbierende Schicht aneinandergeschäumt sind. Die Schalldämmschicht ist aus dem gleichen Isocyanat-Material und dem gleichen Polyol-Material hergestellt wie die schallabsorbierende Schicht, jedoch mit unterschiedlichem Mischungsverhältnis von Isocyanat-Material und Polyol-Material derart, dass sie eine höhere Rohdichte aufweist und härter ist als die schallabsorbierende Schicht, wobei die Schalldämmschicht eine im Wesentlichen luftundurchlässige Außenhaut aufweist.

In einer bevorzugten Ausgestaltung der erfindungsgemäßen Verkleidung ist vorgesehen, dass die Schalldämmschicht am Rand der Verkleidung eine flexible Dichtlippe bildet. Die flexible Dichtlippe gleicht eventuelle Fertigungstoleranzen aus und stellt so eine optimale Anpassung der Verkleidung an angrenzende Bauteile bzw. Karosseriewandabschnitte sicher. Hierdurch wird die schalldämmende Wirkung der erfindungsgemäßen Verkleidung optimiert.

Eine andere vorteilhafte Ausgestaltung der erfindungsgemäßen Verkleidung sieht vor, dass an der Schalldämmschicht ein oder mehrere Befestigungselemente und/oder eine oder mehrere tüllenförmige Kabeldurchführungen einstückig integriert sind. Bei den Befestigungselementen kann es sich beispielsweise um klammerartiger Kabelhalter, Schlauchhalter oder dergleichen handeln. Durch die Integration solcher Befestigungselemente an der Schalldämmschicht lassen sich gegebenenfalls der Arbeitsaufwand und somit die Kosten für eine Montage entsprechender Leitungen reduzieren. Die tüllenförmigen Kabeldurchführungen dienen einer abgedichteten Durchführung von Kabeln und/oder Leitungen durch die Verkleidung.

Weitere bevorzugte und vorteilhafte Ausgestaltungen der erfindungsgemäßen Verkleidung und des Verfahrens zu ihrer Herstellung sind in den Unteransprüchen angegeben.

Nachfolgend wird die Erfindung anhand einer mehrere Ausführungsbeispiele darstellenden Zeichnung näher erläutert. Es zeigen schematisch:
- Fig. 1: eine Schnittansicht des vorderen Abschnitts eines Kraftfahrzeuges mit einer den Fahrgastraum vom Motorraum trennenden Stirnwand und einer innenseitig angeordneten Stirnwandverkleidung;
- Fig. 2: eine vergrößerte Schnittansicht der Stirnwand- verkleidung gemäß Fig. 1;
- Fig. 3: eine Schnittansicht eines Abschnitts einer Stirnwandverkleidung gemäß einem zweiten Ausführungsbeispiel;
- Fig. 4: eine vergrößerte Schnittansicht eines Abschnitts einer erfindungsgemäßen Verkleidung;
- Fig. 5: eine vergrößerte Schnittansicht eines Abschnitts einer erfindungsgemäßen Verkleidung gemäß einem dritten Ausführungsbeispiel;
- Fig. 6: eine Schnittansicht von Formwerkzeugen zur Herstellung einer Schalldämmschicht; und
- Fig. 7: eine Schnittansicht von Formwerkzeugen zum Hinterschäumen einer gemäß Fig. 6 hergestellten Schalldämmschicht.

Die schallisolierende Verkleidung gemäß der Erfindung ist vorzugsweise als fahrgastraumseitige Stirnwandverkleidung 1 eines Kraftfahrzeuges 2 ausgebildet. Sie kann jedoch grundsätzlich auch zur schallisolierenden Verkleidung anderer Karosserieteile eines Kraftfahrzeuges 2 ausgebildet werden.

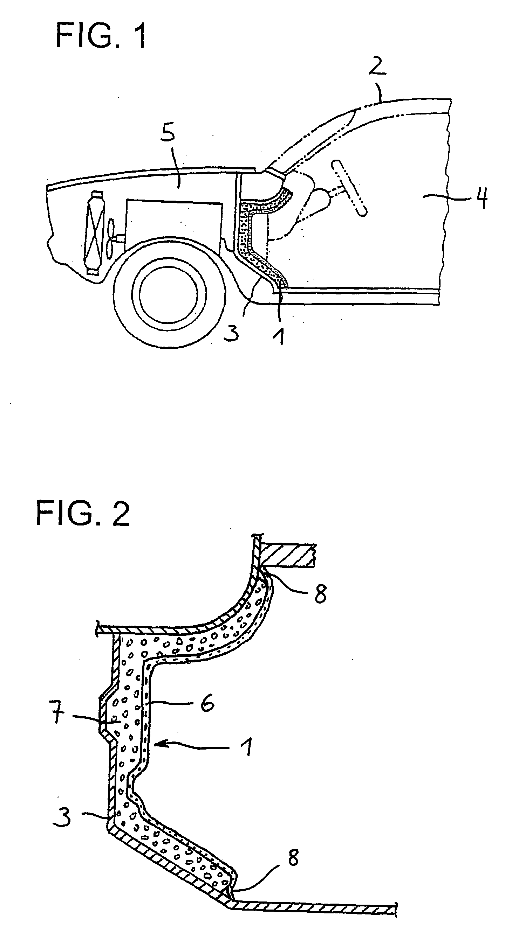

Wie in den Figuren 1 und 2 gezeigt, ist die Verkleidung der Kontur einer Stirnwand 3 angepasst, die den Fahrgastraum 4 vom Motorraum 5 trennt. Die erfindungsgemäße Verkleidung 1 ist selbsttragend und zeichnet sich durch ein relativ geringes Gewicht aus. Ihr Gesamtflächengewicht beträgt weniger als 1000 g/m², vorzugsweise weniger als 800 g/m².

Die Verkleidung 1 ist aus einer Schalldämmschicht 6 aus hoch verdichtetem Polyurethan-Weichschaum und einer schallabsorbierenden Schicht 7 aus offenzelligem Polyurethan-Weichschaum gebildet, wobei die beiden Schichten 6, 7 durch Hinterschäumung der Schalldämmschicht 6 stoffschlüssig miteinander verbunden sind.

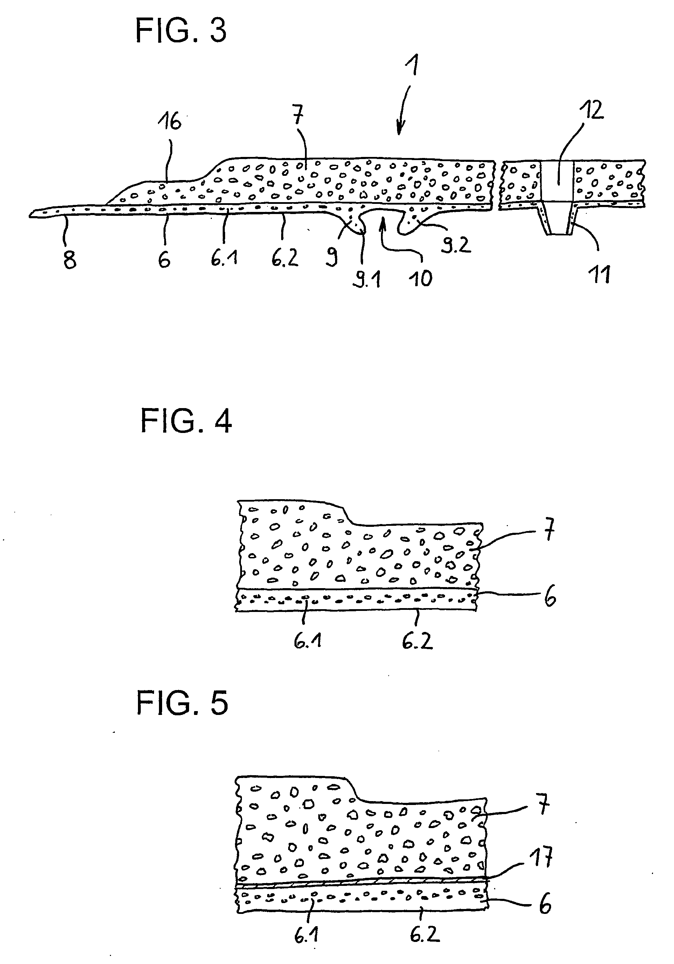

Erfindungsgemäß ist die Schalldämmschicht 6 aus dem gleichen Isocyanat-Material und dem gleichen Polyol-Material hergestellt wie die schallabsorbierende Schicht 7, jedoch mit einem unterschiedlichen Mischungsverhältnis von Isocyanat-Material und Polyol-Material. Infolge des unterschiedlichen Mischungsverhältnisses ist die Schalldämmschicht 6 härter und weist eine höhere Rohdichte auf als die schallabsorbierende Schicht 7. Die Schalldämmschicht 6 ist derart verdichtet, dass sie eine im Wesentlichen luftundurchlässige Außenhaut 6.2 aufweist (vgl. Figuren 4 und 5). Sie kann daher mit Vakuumsaugern angesaugt werden und ermöglicht somit eine automatisierte Montage der Verkleidung 1.

Das Mischungsverhältnis zur Herstellung der verdichteten Polyurethan-Weichschaumschicht (Schalldämmschicht 6) beträgt 100 Gewichtsteile Polyol zu etwa 60 bis 70 Gewichtsteilen Isocyanat, vorzugsweise etwa 63 bis 68 Gewichtsteile Isocyanat, besonders bevorzugt etwa 65 Gewichtsteile Isocyanat.

Das Mischungsverhältnis zur Herstellung des Polyurethan-Weichschaums für die schallabsorbierende Schicht 7 beträgt hingegen 100 Gewichtsteile Polyol zu etwa 45 bis 55 Gewichtsteile Isocyanat, vorzugsweise etwa 48 bis 53 Gewichtsteile insbesondere etwa 50 Gewichtsteile Isocyanat.

Trotz ihrer vergleichsweise hohen Rohdichte ist die Schalldämmschicht 6 ausreichend flexibel. Wie insbesondere in den Figuren 2 und 3 gezeigt ist, besteht eine bevorzugte Ausgestaltung der erfindungsgemäßen Verkleidung 1 darin , dass die Schalldämmschicht 6 am Rand der Verkleidung 1 eine flexible Dichtlippe 8 bildet. Die Dichtlippe 8 kann entlang eines oder mehrerer Randabschnitte oder entlang des gesamten Umfangsrandes der Verkleidung 1 verlaufen.

Mit einer derartigen Dichtlippe 8 lassen sich Toleranzen in der Bemessung angrenzender Einbau- und/oder Karosserieteile ausgleichen, so dass die mit der erfindungsgemäßen Verkleidung 1 erreichbare Schalldämmwirkung optimiert ist.

Wie in Fig. 3 ferner dargestellt ist, können an der Schalldämmschicht 6 ein oder mehrere Befestigungselemente 9 einstückig integriert sein. Die Befestigungselemente 9 sind beispielsweise klammerartige ausgebildet, indem sie zwei an der Außenseite der Schalldämmschicht 6 abstehende Schenkel 9.1, 9.2 aufweisen, die eine hinterschnitte Ausnehmung 10 zur formschlüssigen bzw. klemmenden Aufnahme von Kabeln oder Leitungen (nicht gezeigt) bilden.

Des weiteren können an der Schalldämmschicht 6 auch eine oder mehrere tüllenförmige Kabeldurchführungen 11 einstückig integriert sein, denen damit fluchtende Ausschnitte oder Aussparungen in Form von Durchgangsöffnungen 12 in der schallabsorbierende Schicht 7 zugeordnet sind. Die Kabeldurchführungen 11 sind vorzugsweise konisch ausgebildet und weisen an ihrem jeweiligen Ende mindestens zwei diametral gegenüberliegende Axialschlitze (nicht gezeigt) auf, so dass sie sich an unterschiedliche Durchmesser von Kabeln bzw. Leitungen anpassen können und diese stets abdichtend umfassen.

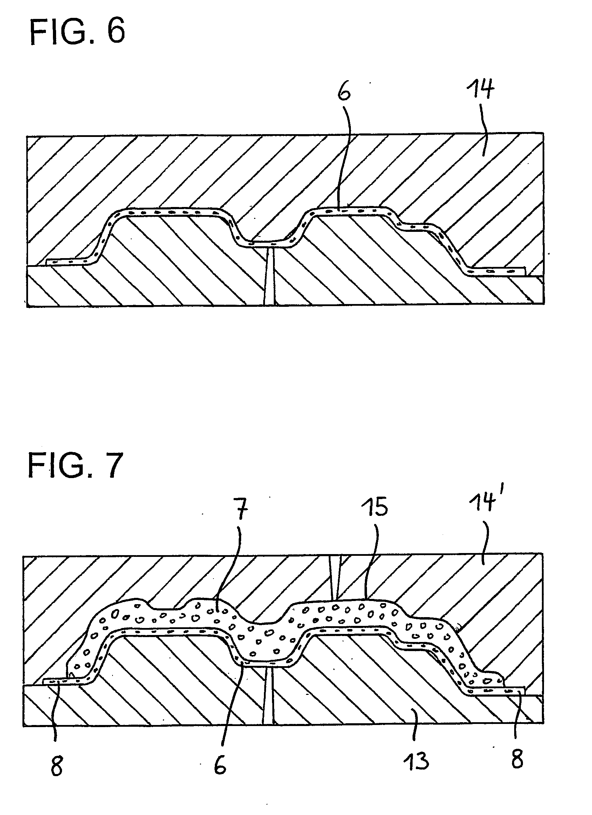

Die erfindungsgemäße Verkleidung 1 lässt sich in der Weise herstellen, dass zunächst aus einer Polyol und Isocyanat enthaltenden Mischung mit dem oben angegebenen Mischungsverhältnis die Schalldämmschicht 6 in einer durch ein Unterwerkzeug 13 und ein Oberwerkzeug 14 definierten Kavität formgeschäumt wird (Fig. 6).

Der Mischung zur Herstellung der Schalldämmschicht 6 kann gegebenenfalls auch Füllstoff, vorzugsweise in Form von Bariumsulfat und/oder Kalziumcarbonat zugegeben werden.

Mindestens eines der Formwerkzeuge 13, 14 ist mit einer Heizeinrichtung (nicht dargestellt) versehen, z.B. mit im Werkzeug 13 und/oder 14 integrierten elektrischen Heizwiderständen. Die Werkzeugtemperatur wird in Abhängigkeit des Mischungsverhältnisses von Isocyanat-Material und Polyol-Material so gesteuert, dass die erzeugte Schalldämmschicht 6 eine zellige Kernzone 6.1 und eine im Wesentlichen luftundurchlässige Außenhaut 6.2 aufweist (vgl. Fig. 4). Die Rohdichte der Schalldämmschicht 6 liegt im Bereich von 0,1 bis 1,4 g/cm³, vorzugsweise im Bereich von 0,2 bis 1,1 g/cm³. Die durchschnittliche Dicke der Schalldämmschicht 6 liegt beispielsweise im Bereich von 1,5 bis 5 mm, insbesondere im Bereich von 2 bis 4 mm.

Nach der Herstellung der Schalldämmschicht 6 wird das Oberwerkzeug 14 gegen ein anderes Oberwerkzeug 14' ausgetauscht, welches mit dem Unterwerkzeug 13 und der daran noch anliegenden Schalldämmschicht 6 eine neue (weitere) Kavität 15 begrenzt (Fig. 7). In diese Kavität 15 wird zur Erzeugung der schallabsorbierenden Schicht 7 wiederum eine Polyol und Isocyanat enthaltende Mischung eingespritzt, wobei die Schicht 7 aus dem gleichen Isocyanat-Material und dem gleichen Polyol-Material hergestellt wird wie die hinterschäumte Schalldämmschicht 6, jedoch mit einem unterschiedlichen Mischungsverhältnis von Isocyanat-Material und Polyol-Material. Dem Polyol oder der Mischung zur Herstellung der schallabsorbierenden Schicht 7 wird optional CO₂ zugegeben.

Die Rohdichte der schallabsorbierenden Schicht 7 liegt im Bereich von 0,016 bis 0,065 g/cm³, vorzugsweise im Bereich von 0,02 bis 0,06 g/cm³. Aufgrund der unterschiedlichen Rohdichten von Schalldämmschicht 6 und schallabsorbierender Schicht 7 ergibt sich am Übergang der Schichten 6, 7 ein akustischer Impedanzsprung, der hinsichtlich der schallisolierenden Wirkung der erfindungsgemäßen Verkleidung 1 vorteilhaft ist.

Die Dicke der Schallabsorbierenden Schicht 7 kann in Abhängigkeit der akustischen Erfordernisse örtlich unterschiedlich stark ausgebildet sein (vgl. insbesondere Fig. 7). Die Dicke der Schicht 7 liegt beispielsweise im Bereich von 10 bis 30 mm. Angrenzend an die durch die Schalldämmschicht 6 gebildete Dichtlippe 8 weist die schallabsorbierende Schicht 7 vorzugsweise einen stufenförmig ausgebildeten Randbereich 16 auf (vgl. Fig. 3).

Bei dem in Fig. 4 dargestellten Abschnitt einer erfindungsgemäßen Verkleidung sind die Schalldämmschicht 6 und die schallabsorbierende Schicht 7 unmittelbar miteinander stoffschlüssig verbunden, wobei zunächst die Schalldämmschicht 6 formgeschäumt wurde und anschließend die schallabsorbierende Schicht 7 durch Hinterschäumen der Schalldämmschicht 6 erzeugt wurde.

Fig. 5 veranschaulicht eine Variante, bei der die Schalldämmschicht 6 und die schallabsorbierende Schicht 5 unter Zwischenordnung einer Sperrfolie 17 aneinandergeschäumt sind. Die Sperrfolie 17 erhöht die Schalldämmwirkung der erfindungsgemäßen Verkleidung 1 und verbessert die Verbindung zwischen Schalldämmschicht 6 und schallabsorbierender Schicht 7. Vorzugsweise besteht die Sperrfolie 17 ebenfalls aus Polyurethan.

Die Herstellung einer Verkleidung gemäß Fig. 5 kann in der Weise erfolgen, dass die Sperrfolie 17 unter Verwendung von Formwerkzeugen 13, 14 gemäß Fig. 6 mit der die Schalldämmschicht 6 bildenden Materialmischung hinterschäumt wird. Hierzu können an der Unterseite des Oberwerkzeuges 14 eine Vielzahl kleiner Saugöffnungen (nicht gezeigt) münden, mittels denen die Sperrfolie 17 durch Saugwirkung am Oberwerkzeug 14 gehalten wird. Die schallabsorbierende Schicht 7 wird danach unter Verwendung eines anderen, eine entsprechende Kavität aufweisenden Oberwerkzeuges 14' durch Hinterschäumen der Sperrfolie 17 erzeugt, ähnlich wie es in Fig. 7 dargestellt ist.

Die Ausführung der Erfindung ist nicht auf die vorstehend beschriebenen Ausführungsbeispiele beschränkt. Vielmehr sind verschiedene weitere Varianten denkbar. So können an der Schalldämmschicht 6 beispielsweise auch bereichsweise versteifende Rippen oder dergleichen einstückig ausgeformt sein.

## Patentansprüche

1. Verfahren zur Herstellung einer leichten, schallisolierenden Verkleidung (1) für ein Karosserieteil eines Kraftfahrzeuges, insbesondere in Form einer leichten Stirnwandverkleidung, bei dem unter Verwendung eines Formwerkzeuges (13, 14, 14') eine Schalldämmschicht (6) aus Polyurethanschaum mit offenzelligem Polyurethan-Weichschaum zur Ausbildung einer schallabsorbierenden Schicht (7) hinterschäumt wird oder unter Verwendung eines Formwerkzeuges (13, 14, 14') eine schallabsorbierende Schicht (7) aus Polyurethan-Weichschaum mit Polyurethanschaum zur Ausbildung einer Schalldämmschicht (6) hinterschäumt wird,
**dadurch gekennzeichnet, dass**
der Polyurethan-Weichschaum aus dem gleichen Isocyanat-Material und dem gleichen Polyol-Material erzeugt wird wie der Polyurethanschaum der Schalldämmschicht (6), jedoch mit unterschiedlichem Mischungsverhältnis von Isocyanat-Material und Polyol-Material, wobei der Gewichtsanteil des Isocyanat-Materials in der Mischung zur Herstellung der Schalldämmschicht (6) größer eingestellt wird als in der Mischung zur Herstellung der schallabsorbierenden Schicht (7), so dass die Schalldämmschicht (6) eine im Wesentlichen luftundurchlässige Außenhaut (6.2) und eine höhere Rohdichte aufweist als die erzeugte schallabsorbierende Schicht (7).

2. Verfahren nach Anspruch 1,
**dadurch gekennzeichnet, dass**
das Mischungsverhältnis zur Herstellung des Polyurethanschaums für die Schalldämmschicht (6) so eingestellt wird, dass 100 Gewichtsteile Polyol mit 60 bis 70 Gewichtsteilen Isocyanat vermischt werden, wohingegen das Mischungsverhältnis zur Herstellung des Polyurethan-Weichschaums für die schallabsorbierende Schicht (7) so eingestellt wird, dass 100 Gewichtsteile Polyol mit 45 bis 55 Gewichtsteilen Isocyanat vermischt werden.

3. Verfahren nach Anspruch 1 oder 2,
**dadurch gekennzeichnet, dass**
das Mischungsverhältnis zur Herstellung des Polyurethanschaums für die Schalldämmschicht (6) so eingestellt wird, dass 100 Gewichtsteile Polyol mit 63 bis 68 Gewichtsteilen, insbesondere mit 65 Gewichtsteilen Isocyanat vermischt werden.

4. Verfahren nach einem der Ansprüche 1 bis 3,
**dadurch gekennzeichnet, dass**
das Mischungsverhältnis zur Herstellung des Polyurethan-Weichschaums für die schallabsorbierende Schicht (7) so eingestellt wird, dass 100 Gewichtsteile Polyol mit 48 bis 53 Gewichtsteilen, insbesondere mit 50 Gewichtsteilen Isocyanat vermischt werden.

5. Verfahren nach einem der Ansprüche 1 bis 4,
**dadurch gekennzeichnet, dass**
dem Polyol oder der Mischung zur Herstellung des Polyurethan-Weichschaums für die schallabsorbierende Schicht (7) CO₂ zugegeben wird.

6. Verfahren nach einem der Ansprüche 1 bis 5,
**dadurch gekennzeichnet, dass**
der Mischung zur Herstellung der Schalldämmschicht (6) Füllstoff, vorzugsweise in Form von Bariumsulfat und/oder Kalziumcarbonat zugegeben wird.

7. Verfahren nach einem der Ansprüche 1 bis 6,
**dadurch gekennzeichnet, dass**
eine Seite einer Sperrfolie (17) mit dem die Schalldämmschicht (6) bildenden Polyurethanschaum und die andere Seite der Sperrfolie (17) mit dem die schallabsorbierende Schicht (7) bildenden Polyurethan-Weichschaum hinterschäumt wird.

8. Verfahren nach Anspruch 7,
**dadurch gekennzeichnet, dass**
als Sperrfolie (17) eine Sperrfolie aus Polyurethan verwendet wird.

9. Verfahren nach einem der Ansprüche 1 bis 8,
**dadurch gekennzeichnet, dass**
die Schalldämmschicht (6) partiell mit Polyurethan-Weichschaum hinterschäumt wird, derart, dass die Schalldämmschicht (6) am Rand der Verkleidung (1) eine flexible Dichtlippe (8) bildet.

10. Verfahren nach einem der Ansprüche 1 bis 9,
**dadurch gekennzeichnet, dass**
die Schalldämmschicht (6) derart geschäumt wird, dass daran ein oder mehrere Befestigungselemente (9) einstückig integriert sind.

11. Schallisolierende Verkleidung (1) für ein Karosserieteil eines Kraftfahrzeuges, insbesondere in Form einer leichten Stirnwandverkleidung, mit einer formgeschäumten Schalldämmschicht (6) aus Polyurethanschaum und einer formgeschäumten schallabsorbierenden Schicht (7) aus offenzelligem Polyurethan-Weichschaum, wobei die Schalldämmschicht (6) und die schallabsorbierende Schicht (7) aneinandergeschäumt sind,
**dadurch gekennzeichnet, dass**
die Schalldämmschicht (6) aus dem gleichen Isocyanat-Material und dem gleichen Polyol-Material hergestellt ist wie die schallabsorbierende Schicht (7), jedoch mit unterschiedlichem Mischungsverhältnis von Isocyanat-Material und Polyol-Material derart, dass die Schalldämmschicht (6) eine höhere Rohdichte aufweist und härter ist als die schallabsorbierende Schicht (7), wobei die Schalldämmschicht (6) eine im Wesentlichen luftundurchlässige Außenhaut (6.2) aufweist.

12. Verkleidung nach Anspruch 11,
**dadurch gekennzeichnet, dass**
die Schalldämmschicht (6) eine Rohdichte im Bereich von 0,1 bis 1,4 g/cm³ aufweist, während die schallabsorbierende Schicht (7) eine Rohdichte im Bereich von 0,016 bis 0,065 g/cm³ aufweist.

13. Verkleidung nach einem der Ansprüche 11 bis 12,
**dadurch gekennzeichnet, dass**
die Schalldämmschicht (6) eine Rohdichte im Bereich von 0,2 bis 1,1 g/cm³ aufweist.

14. Verkleidung nach einem der Ansprüche 11 bis 13,
**dadurch gekennzeichnet, dass**
die schallabsorbierende Schicht (7) eine Rohdichte im Bereich von 0,02 bis 0,06 g/cm³ aufweist.

15. Verkleidung nach einem der Ansprüche 11 bis 14,
**dadurch gekennzeichnet, dass**
die schallabsorbierende Schicht (7) durch Hinterschäumung der Schalldämmschicht (6) unmittelbar mit der Schalldämmschicht (6) verbunden ist.

16. Verkleidung nach einem der Ansprüche 11 bis 14,
**dadurch gekennzeichnet, dass**
die Schalldämmschicht (6) und die schallabsorbierende Schicht (7) unter Zwischenordnung einer Sperrfolie (17) aneinandergeschäumt sind.

17. Verkleidung nach Anspruch 16,
**dadurch gekennzeichnet, dass**
die Sperrfolie (17) aus Polyurethan hergestellt ist.

18. Verkleidung nach einem der Ansprüche 11 bis 17,
**dadurch gekennzeichnet, dass**
die Schalldämmschicht (6) am Rand der Verkleidung (1) eine flexible Dichtlippe (8) bildet.

19. Verkleidung nach einem der Ansprüche 11 bis 18,
**dadurch gekennzeichnet, dass**
an der Schalldämmschicht (6) ein oder mehrere Befestigungselemente (9) und/oder eine oder mehrere tüllenförmige Kabeldurchführungen (11) einstückig integriert sind.

20. Verkleidung nach einem der Ansprüche 11 bis 19,
**dadurch gekennzeichnet, dass**
sie ein Gesamtflächengewicht von weniger als 1000 g/m² aufweist.

## Claims

1. A method of manufacturing a light-weight sound-proof covering (1) for a body part of a motor vehicle, in particular in the form of a light-weight end wall covering, wherein a sound-damping layer (6) of polyurethane foam is foamed, on its rear side, with open-cell polyurethane soft foam for forming a sound-absorbing layer (7), using a forming tool (13, 14, 14') or wherein a sound-absorbing layer (7) made of polyurethane soft foam is foamed, on its rear side, with polyurethane foam for forming a sound-damping layer (6), using a forming tool (13, 14, 14'),
**characterized in that** the polyurethane soft foam is made from the same isocyanate material and from the same polyol material as the polyurethane foam of the sound-damping layer (6), but with different blend ratio of isocyanate material and of polyol material, the weight proportion of the isocyanate material in the blend for manufacturing the sound-damping layer (6) being set to be higher than in the blend for manufacturing the sound-absorbing layer (7) so that the sound-damping layer (6) comprises a substantially air-impermeable outer skin (6.2) and a higher gross density than the sound-absorbing layer (7) produced.

2. The method as set forth in claim 1,
**characterized in that**
the blend ratio for manufacturing the polyurethane foam for the sound-damping layer (6) is set so that 100 parts by weight of polyol are blended with 60 to 70 parts by weight of isocyanate, whereas the blend ratio for manufacturing the polyurethane soft foam for the sound-absorbing layer (7) is set so that 100 parts by weight of polyol are blended with 45 to 55 parts by weight of isocyanate.

3. The method as set forth in claim 1 or 2,
**characterized in that**
the blend ratio for the sound-damping layer (6) is set so that 100 parts by weight of polyol are blended with 63 to 68 parts by weight, in particular with 65 parts by weight of isocyanate.

4. The method as set forth in any one of the claims 1 through 3,
**characterized in that**
the blend ratio for manufacturing the polyurethane soft foam for the sound-absorbing layer (7) is set so that 100 parts by weight of polyol are blended with 48 to 53 parts by weight, in particular with 50 parts by weight of isocyanate.

5. The method as set forth in any one of the claims 1 through 4,
**characterized in that**
CO₂ is added to the polyol or to the blend for manufacturing the polyurethane soft foam for the sound-absorbing layer (7).

6. The method as set forth in any one of the claims 1 through 5,
**characterized in that**
filler material, preferably in the form of barium sulfate and/or calcium carbonate, is added to the blend for manufacturing the sound-damping layer (6).

7. The method as set forth in any one of the claims 1 through 6,
**characterized in that**
one side of a barrier sheet (17) is foamed, on its rear side, with the polyurethane foam forming the sound-damping layer (6) and that the other side of the barrier sheet (17) is foamed, on its rear side, with the polyurethane soft foam forming the sound-absorbing layer (7).

8. The method as set forth in claim 7,
**characterized in that**
a barrier sheet made of polyurethane is used as the barrier sheet (17).

9. The method as set forth in any one of the claims 1 through 8,
**characterized in that**
the sound-damping layer (6) is partially foamed with polyurethane soft foam on its rear side in such a manner that the sound-damping layer (6) forms a flexible sealing lip (8) on the border of the covering (1).

10. The method as set forth in any one of the claims 1 through 9,
**characterized in that**
the sound-damping layer (6) is foamed so that one or more fastening elements (9) are integrally integrated thereon.

11. A sound-proof covering (1) for a body part of a motor vehicle, in particular in the form of a light-weight end wall covering, with a foam-molded sound-damping layer (6) made of polyurethane foam and of a foam-molded sound-absorbing layer (7) made of open-cell polyurethane soft foam, said sound-damping layer (6) and said sound-absorbing layer (7) being joined together by foaming,
**characterized in that**
the sound-damping layer (6) is made from the same isocyanate material and from the same polyol material as the sound-absorbing layer (7), but with different blend ratio of isocyanate material and of polyol material in such a manner that the sound-damping layer (6) has a higher gross density and is harder than the sound-absorbing layer (7), the sound-damping layer (6) comprising a substantially air-impermeable outer skin (6.2).

12. The covering as set forth in claim 11,
**characterized in that**
the sound-damping layer (6) has a gross density ranging from 0.1 to 1.4 g/cm³ whereas the sound-absorbing layer (7) has a gross density ranging from 0.016 to 0.065 g/cm³.

13. The covering as set forth in any one of the claims 11 through 12,
**characterized in that**
the sound-damping layer (6) has a gross density ranging from 0.2 to 1.1 g/cm³.

14. The covering as set forth in any one of the claims 11 through 13,
**characterized in that**
the sound-absorbing layer (7) has a gross density ranging from 0.02 to 0.06 g/cm³.

15. The covering as set forth in any one of the claims 11 through 14,
**characterized in that**
the sound-absorbing layer (7) is connected directly to the sound-damping layer (6) by foaming the rear side of the sound-damping layer (6).

16. The covering as set forth in any one of the claims 11 through 14,
**characterized in that**
the sound-damping layer (6) and the sound-absorbing layer (7) are joined together by foaming, a barrier sheet (17) being interposed therein between.

17. The covering as set forth in claim 16,
**characterized in that**
the barrier sheet (17) is made of polyurethane.

18. The covering as set forth in any one of the claims 11 through 17,
**characterized in that**
the sound-damping layer (6) forms a flexible sealing lip (8) on the border of the covering (1).

19. The covering as set forth in any one of the claims 11 through 18,
**characterized in that**
one or more fastening elements (9) and/or one or more beak-shaped cable feedthroughs (11) are integrally integrated on the sound-damping layer (6).

20. The covering as set forth in any one of the claims 11 through 19,
**characterized in that**
it comprises an overall weight per unit area of less than 1000 g/m².

## Revendications

1. Procédé de fabrication d'un revêtement léger insonorisant (1) pour une pièce de carrosserie d'un véhicule automobile, en particulier sous forme d'un revêtement léger de tablier, dans lequel, en utilisant un moule de formage (13, 14, 14'), une couche insonorisante (6) en mousse de polyuréthane est pourvue au dos d'une mousse souple de polyuréthane à alvéoles ouverts pour former une couche à absorption acoustique (7) ou, en utilisant un moule de formage (13, 14, 14'), une couche à absorption acoustique (7) en mousse souple de polyuréthane est pourvue au dos de mousse de polyuréthane pour former une couche insonorisante (6), **caractérisé par le fait que** la mousse souple de polyuréthane est produite à partir de la même matière isocyanate et de la même matière polyol que la mousse de polyuréthane de ladite couche insonorisante (6), mais avec des rapports de mélange différents des matières isocyanate et polyol, la partie en poids de la matière isocyanate dans le mélange servant à la fabrication de la couche insonorisante (6) étant réglée de manière à être supérieure à celle dans le mélange servant à la fabrication de la couche à absorption acoustique (7) de sorte que la couche insonorisante (6) présente un peau extérieur pour l'essentiel imperméable à l'air (6.2) et une masse volumique apparente plus importante que la couche à absorption acoustique (7) produite.

2. Procédé selon la revendication 1, **caractérisé par le fait que** le rapport de mélange pour la fabrication de la mouse de polyuréthane pour la couche insonorisante (6) est réglé de manière à ce que 100 parties en poids de polyol soient mélangées à 60 à 70 parties en poids d'isocyanate, par contre, le rapport de mélange pour la fabrication de la mousse souple de polyuréthane pour la couche à absorption acoustique (7) est réglé de manière à ce que 100 parties en poids de polyol soient mélangées à 45 à 55 parties en poids d'isocyanate.

3. Procédé selon la revendication 1 ou 2, **caractérisé par le fait que** le rapport de mélange pour la fabrication de la mousse de polyuréthane pour la couche insonorisante (6) est réglé de manière à ce que 100 parties en poids de polyol soient mélangées à 63 à 68 parties en poids, en particulier à 65 parties en poids d'isocyanate.

4. Procédé selon l'une quelconque des revendications 1 à 3, **caractérisé par le fait que** le rapport de mélange pour la fabrication de la mousse souple de polyuréthane pour la couche à absorption acoustique (7) est réglé de manière à ce que 100 parties en poids de polyol soient mélangées à 48 à 53 parties en poids, en particulier à 50 parties en poids d'isocyanate.

5. Procédé selon l'une quelconque des revendications 1 à 4, **caractérisé par le fait que** l'on ajoute du CO₂ au polyol ou au mélange servant à la fabrication de la mousse souple de polyuréthane pour la couche à absorption acoustique (7).

6. Procédé selon l'une quelconque des revendications 1 à 5, **caractérisé par le fait que** l'on ajoute au mélange servant à la fabrication de la couche insonorisante (6) une matière de charge, de préférence sous forme de sulfate de baryum et/ou de carbonate de calcium.

7. Procédé selon l'une quelconque des revendications 1 à 6, **caractérisé par le fait qu'**une face d'une feuille de blocage (17) sera revêtue de la mousse de polyuréthane formant ladite couche insonorisante (6) et que l'autre face de ladite feuille de blocage (17) sera revêtue de la mousse souple de polyuréthane formant ladite couche à absorption acoustique (7).

8. Procédé selon la revendication 7, **caractérisé par le fait que** l'on utilise une feuille de blocage en polyuréthane en tant que feuille de blocage (17).

9. Procédé selon l'une quelconque des revendications 1 à 8, **caractérisé par** le fait ladite couche insonorisante (6) est revêtue au dos en partie de mousse souple de polyuréthane, de telle sorte que la couche insonorisante (6) forme, sur le bord du revêtement (1), une lèvre d'étanchéité (8) flexible.

10. Procédé selon l'une quelconque des revendications 1 à 9, **caractérisé par** le fait ladite couche insonorisante (6) est moussée de telle manière qu'un ou plusieurs élément(s) de fixation (9) sont incorporés d'un seul tenant sur celle-ci.

11. Revêtement insonorisant (1) pour une pièce de carrosserie d'un véhicule automobile, en particulier sous forme d'un revêtement léger de tablier, comprenant une couche insonorisante (6) en mousse de polyuréthane, moussée à l'aide d'un moule de formage, ainsi qu'une couche à absorption acoustique (7) en mousse souple de polyuréthane à alvéoles ouverts, moussée à l'aide d'un moule de formage, ladite couche insonorisante (6) et ladite couche à absorption acoustique (7) étant moussées l'une sur l'autre, **caractérisé par le fait que** ladite couche insonorisante (6) est réalisée à partir de la même matière isocyanate et de la même matière polyol que la couche à absorption acoustique (7), mais avec des rapports de mélange différents des matières isocyanate et polyol, de telle sorte que la couche insonorisante (6) présente une masse volumique apparente plus importante et une plus grande dureté que la couche à absorption acoustique (7), la couche insonorisante (6) présente un peau extérieur pour l'essentiel imperméable à l'air (6.2).

12. Revêtement selon la revendication 11, **caractérisé par le fait que** la couche insonorisante (6) présente une masse volumique apparente comprise entre 0,1 et 1,4 g/cm³, tandis que ladite couche à absorption acoustique (7) présente une masse volumique apparente comprise entre 0,016 et 0,065 g/cm³.

13. Revêtement selon l'une quelconque des revendications 11 à 12, **caractérisé par le fait que** ladite couche insonorisante (6) présente une masse volumique apparente comprise entre 0,2 et 1,1 g/cm³.

14. Revêtement selon l'une quelconque des revendications 11 à 13, **caractérisé par le fait que** ladite couche à absorption acoustique (7) présente une masse volumique apparente comprise entre 0,02 et 0,06 g/cm³.

15. Revêtement selon l'une quelconque des revendications 11 à 14, **caractérisé par le fait que** ladite couche à absorption acoustique (7) est reliée directement à la couche insonorisante (6) en étant moussée sur le dos de celle-ci.

16. Revêtement selon l'une quelconque des revendications 11 à 14, **caractérisé par le fait que** ladite couche insonorisante (6) et ladite couche à absorption acoustique (7) sont moussées l'une sur l'autre avec interposition d'une feuille de blocage (17).

17. Revêtement selon la revendication 16, **caractérisé par le fait que** ladite feuille de blocage (17) est réalisée en polyuréthane.

18. Revêtement selon l'une quelconque des revendications 11 à 17, **caractérisé par le fait que** ladite couche insonorisante (6) forme sur le bord du revêtement (1) une lèvre d'étanchéité (8) flexible.

19. Revêtement selon l'une quelconque des revendications 11 à 18, **caractérisé par le fait que** sur ladite couche insonorisante (6) sont intégrés d'un seul tenant un ou plusieurs élément(s) de fixation (9) et/ou un ou plusieurs passe(s) câble (11) en forme de douille.

20. Revêtement selon l'une quelconque des revendications 11 à 19, **caractérisé par le fait qu'**il présente un grammage total inférieur à 1000 g/m².
